# FASCICULE DE BREVET EUROPEEN

(11) **EP 2 856 060 B1**
(45) Date de publication et mention de la délivrance du brevet: **10.07.2019**
(21) Numéro de dépôt: 13726561.7
(22) Date de dépôt: 05.06.2013
(51) Int. Cl.: F28F 9/02, F28D 9/00, F28D 21/00

(54) **ECHANGEUR DE CHALEUR À PLAQUES VISANT DES DÉBITS HOMOGÈNES DE FLUIDE ENTRE CANAUX**
PLATTENWÄRMETAUSCHER FÜR HOMOGENE FLUIDSTRÖMUNGEN ZWISCHEN LEITUNGEN
PLATE HEAT EXCHANGER FOR HOMOGENEOUS FLUID FLOWS BETWEEN DUCTS

(30) Priorité: 05.06.2012 FR 1255233
(43) Date de publication de la demande: 08.04.2015
(73) Titulaire: Société Technique pour l'Energie Atomique, 91190 Villiers Le Bacle (FR)
(72) Inventeur: CASTANIE, Christophe, F-13011 Marseille (FR); CHARCOSSET, Jean-Yves, F-13770 Venelles (FR)
(74) Mandataire: Lavoix
(86) Numéro de dépôt international: PCT/EP2013/061540
(87) Numéro de publication internationale: WO 2013/182584

(56) Documents cités:
- EP-A1- 2 110 635
- EP-A2- 2 161 528
- DE-A1- 10 160 380
- FR-A1- 2 225 711
- US-A1- 2010 293 946

## Description

L'invention concerne en général les échangeurs de chaleur à plaques.

Plus précisément, l'invention concerne selon un premier aspect un échangeur de chaleur à plaques selon le préambule de la revendication 1.

US 2010/0051248 décrit sur les Figures 1 et 2 un échangeur de chaleur à plaques du type ci-dessus. Cet échangeur à plaques peut difficilement être agencé dans la cuve d'un réacteur nucléaire, de manière à être fixé en porte-à-faux sur la cuve, tout en permettant une circulation de fluide stable et homogène dans des passages primaires et secondaires.

FR 2 225 711 A1 décrit un échangeur à plaques mises en forme. Ces plaques sont empilées les unes sur les autres pour délimiter des groupes entremêlés de conduits dans lesquels des premier et second fluides circulent dans des sens opposés. L'échangeur comprend une ouverture d'arrivée d'air et deux ouvertures de sortie.

Dans ce contexte, l'invention vise à proposer un échangeur de chaleur à plaques qui puisse plus facilement être agencé dans la cuve d'un réacteur nucléaire, tout en garantissant un écoulement stable et homogène dans les passages primaires et secondaires.

A cette fin, l'invention porte sur un échangeur de chaleur à plaques du type précité, selon la revendication 1.

Une telle disposition des collecteurs d'alimentation et du collecteur d'évacuation secondaire permet de suspendre l'échangeur de chaleur à la paroi d'une cuve par l'intermédiaire du collecteur d'évacuation secondaire. L'échangeur à plaques dans ce cas est typiquement placé avec son axe longitudinal orienté selon la direction verticale. Le collecteur d'évacuation secondaire est placé vers le haut. Le collecteur d'évacuation secondaire débouche typiquement hors de l'échangeur à plaques par un orifice de sortie entouré d'une bride de fixation. Des organes de fixations, par exemple des vis ou des tirants permettent de fixer l'échangeur à la cuve par l'intermédiaire de la bride. Dans ce cas, la cuve comporte typiquement une traversée présentant un passage interne placé en coïncidence avec la sortie du collecteur d'évacuation secondaire.

Le fait que les premier et second collecteurs d'alimentation secondaires soient situés à la seconde extrémité longitudinale des plaques, de manière symétrique par rapport au plan médian et écartés de ce plan médian, permet de dessiner les passages secondaires de telle sorte que tous ces passages secondaires aient sensiblement la même longueur. Un tel aménagement ne serait pas possible par exemple avec un collecteur d'alimentation secondaire unique situé dans le plan médian, en particulier quand on veut ménager un grand nombre de passages secondaires à un même niveau de l'échangeur, c'est-à-dire entre deux plaques données. Au contraire, le fait de placer deux collecteurs d'alimentation secondaires écartés de manière symétrique du plan médian laisse beaucoup plus de liberté pour dessiner un grand nombre de passages secondaires, de longueurs sensiblement identiques à un même niveau de l'échangeur.

L'échangeur de chaleur peut en outre présenter une ou plusieurs caractéristiques selon l'une quelconque des revendications 2 à 13.

Le fait que les passages secondaires aient la même longueur est important pour obtenir des vitesses de circulation homogènes du fluide secondaire dans les passages secondaires. Si certains passages secondaires étaient plus courts et d'autres plus longs, la vitesse de circulation du fluide secondaire serait plus lente dans les canaux les plus longs et plus rapide dans les canaux les plus courts. Ceci pourrait entrainer des hétérogénéités de température au sein de l'échangeur à plaques, créer des contraintes thermomécaniques au sein de l'échangeur ainsi qu'une perte d'efficacité de l'échange primaire/secondaire (mauvaise utilisation d'une partie de la surface d'échange).

L'échangeur de chaleur à plaques est typiquement prévu pour être utilisé dans un réacteur nucléaire, notamment dans un réacteur nucléaire de taille petite ou moyenne. Il est typiquement prévu pour le transfert de chaleur depuis le fluide primaire du réacteur nucléaire vers le fluide secondaire. Le fluide primaire est échauffé par circulation dans le coeur du réacteur nucléaire.

Typiquement, le fluide primaire est de l'eau, et le fluide secondaire est également de l'eau. Dans ce cas, l'échangeur de chaleur est typiquement un générateur de vapeur. Le fluide secondaire pénètre dans l'échangeur de chaleur sous forme liquide. Il est vaporisé sous l'effet de la chaleur cédée par le fluide primaire et sort de l'échangeur de chaleur sous forme de vapeur.

En variante, les fluides primaire et secondaire ne sont pas de l'eau. Par exemple, les fluides primaire et/ou secondaire sont des métaux liquides tels que le sodium, ou des gaz.

L'échangeur de chaleur à plaques, comme indiqué plus haut, est typiquement prévu pour être disposé à l'intérieur de la cuve d'un réacteur nucléaire. Cette cuve contient également le coeur du réacteur nucléaire et différents internes.

En variante, l'échangeur à plaques peut ne pas être situé dans la cuve d'un réacteur nucléaire mais être intercalé dans le circuit primaire d'un réacteur nucléaire, hors de la cuve. Il peut également être utilisé dans une installation industrielle autre qu'un réacteur nucléaire.

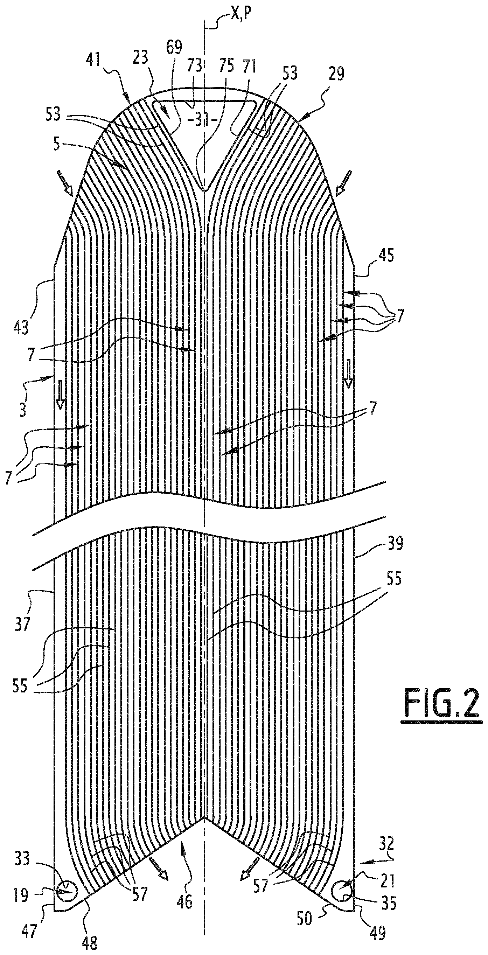

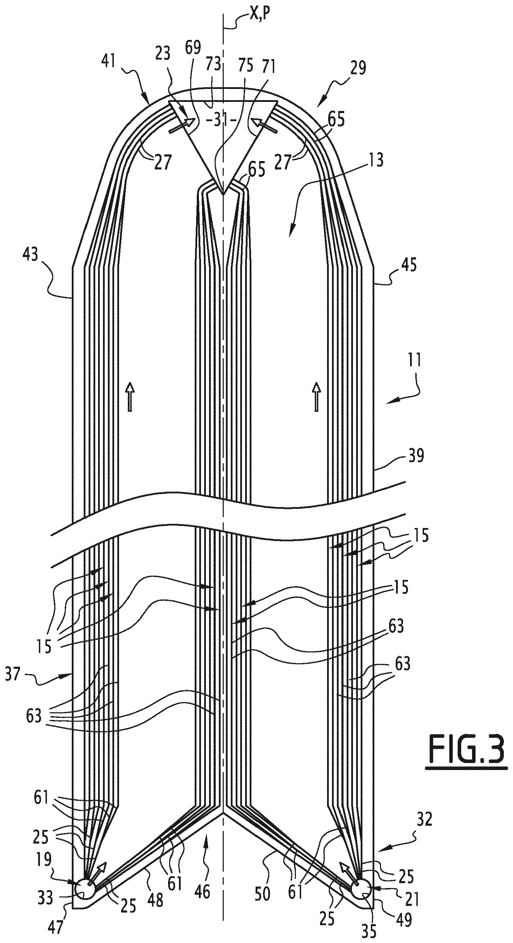

Les plaques de l'échangeur de chaleur sont typiquement superposées les unes sur les autres, parallèlement les unes aux autres. Le plan médian (plan P sur les figures 2 et 3) est typiquement perpendiculaire aux plaques. Les premier et second collecteurs d'alimentation secondaires sont typiquement aussi écartés que possible du plan médian. Ils sont également, de préférence, décalés autant que possible vers la seconde extrémité longitudinale des plaques.

Ceci facilite l'agencement de passages secondaires de même longueur dans un même niveau de l'échangeur, et par voie de conséquence, favorise aussi l'agencement de passages primaires de même longueur dans un même niveau de l'échangeur.

Avantageusement, les passages primaires et secondaires sont creusés dans des grandes faces de plaques, appelées respectivement plaques primaires et secondaires. On obtient ainsi un échangeur à plaques particulièrement robuste et compact. Les passages primaires et secondaires sont typiquement gravés dans les plaques primaires et secondaires. Ils sont ouverts au niveau des grandes faces des plaques primaires et secondaires. En d'autres termes, les passages primaires et secondaires sont des rainures formées dans la masse des plaques primaires et secondaires. Chaque plaque primaire et secondaire présente une première grande face dans laquelle sont formés des passages et une seconde grande face dépourvue de passages. Quand les plaques primaires et secondaires sont empilées les unes sur les autres de manière alternées, la seconde grande face d'une plaque donnée vient fermer les passages de la plaque située immédiatement sous elle.

Alternativement, les passages primaires et secondaires sont usinés dans les premières grandes faces, par exemple par laser ou tout autre type d'usinage (photochimique, mécanique...).

En variante, chaque plaque porte des rainures sur ses deux grandes faces. Ces rainures coïncident les unes avec les autres quand les plaques sont empilées. Les rainures en vis-à-vis situées entre deux plaques données définissent des passages primaires ou secondaires.

En variante, les passages primaires et secondaires ne sont pas creusés dans les grandes faces de plaques primaire et secondaire mais par exemple sont délimités par des inserts agencés entre des plaques.

Typiquement, un niveau constitué d'une rangée des passages primaires (niveau primaire) est encadré par deux niveaux avec des passages secondaires (niveau secondaire), et réciproquement. En variante, on place successivement un niveau primaire, deux niveaux secondaires, un niveau primaire, etc. On peut aussi placer deux niveaux primaires, puis deux niveaux secondaires, puis deux niveaux primaires, etc. D'autres configurations peuvent être envisagées.

De préférence, les passages secondaires présentent des longueurs développées respectives comprises entre L0 + 10% et L0 -10% . L0 est ici une longueur prédéterminée de référence. Ainsi, tous les passages secondaires présentent sensiblement la même longueur développée. On entend ici par longueur développée la longueur parcourue quand on suit un passage secondaire depuis un collecteur d'alimentation secondaire jusqu'au collecteur d'évacuation secondaire. Il est à noter, comme on le décrira plus loin, que plusieurs passages secondaires peuvent partager un tronçon commun, notamment un tronçon amont débouchant dans un collecteur d'alimentation secondaire. Ces passages se séparent les uns des autres en aval du tronçon commun. Dans ce cas, on entend ici par longueur développée la longueur totale du passage, y compris celle du tronçon commun. De préférence, les passages secondaires présentent des longueurs développées comprises entre L0+5% et L0-5%, et encore de préférence comprises entre L0+2% et L0-2%.

Du fait que les passages secondaires présentent tous des longueurs développées sensiblement égales, le fluide secondaire a sensiblement le même profil de vitesse dans tous les passages secondaires. Il a de ce fait également sensiblement le même profil de température le long de tous les passages secondaires.

D'un point de vue thermohydraulique, ceci permet de maîtriser la distribution des débits entre les différents canaux secondaires, et donc l'équilibre des puissances échangées dans les différents canaux. Ainsi toute la surface d'échange de la plaque est efficace en matière d'échange thermique.

Il en découle aussi qu'il n'y a pas de dilatation différentielle entre différentes zones d'une même plaque ou entre deux plaques secondaires. Ceci est particulièrement important du fait que les plaques sont généralement soudées les unes aux autres et constituent donc un bloc particulièrement rigide. Ceci permet de réduire les contraintes thermomécaniques au sein de l'échangeur à plaques et de réduire le risque d'apparition de fissures ou de fuites à long terme.

De même, les passages primaires présentent de préférence des longueurs développées respectives comprises entre L1+ 10% et L1-10%.

Ainsi, tous les passages primaires présentent sensiblement la même longueur développée. L1 est ici une longueur de référence prédéterminée. L1 est généralement différente de L0. De préférence, les passages primaires présentent des longueurs développées comprises entre L1+5% et L1-5%, et encore de préférence comprise entre L1+2% et L1-2%.

Comme précédemment, ceci permet d'obtenir des profils de vitesse similaires pour le fluide primaire dans les passages primaires, et des profils de température similaires le long des passages primaires. Ceci contribue à améliorer l'efficacité de l'échange thermique primaire/secondaire et à réduire les contraintes thermomécaniques dans l'échangeur à plaques,
Typiquement, le collecteur d'évacuation secondaire présente une section droite en V. On entend ici par section droite la section du collecteur d'évacuation secondaire, prise perpendiculairement à son axe central. Celui-ci est typiquement rectiligne et perpendiculaire aux plaques. En d'autres termes, le collecteur d'évacuation secondaire présente typiquement une section droite en V sensiblement constante sur toute sa longueur. Une telle forme est particulièrement avantageuse pour permettre l'aménagement de passages secondaires ayant tous la même longueur développée.

En effet, le V pointe typiquement longitudinalement vers la seconde extrémité longitudinale des plaques. La pointe du V est typiquement située dans le plan médian. Le collecteur d'évacuation secondaire est ainsi délimité par deux surfaces planes inclinées l'une par rapport à l'autre. Ces surfaces planes se rejoignent le long d'une arrête, constituant la pointe du V, située dans le plan médian. Les surfaces planes, à partir de ladite arrête, s'écartent du plan médian et s'étendent vers la première extrémité longitudinale des plaques. Les passages secondaires débouchent dans l'une ou l'autre des deux surfaces planes. Certains passages secondaires débouchent à proximité de l'arrête, alors que d'autres débouchent dans des zones éloignées de l'arrête. Ceci permet de faire varier la longueur des parties terminales hautes des passages secondaires. De telles variations peuvent notamment compenser les différences de longueurs entre les passages secondaires dans les parties terminales basses de ces passages.

En variante, les deux surfaces pourraient ne pas être entièrement planes et être incurvées localement ou totalement. De même, elles pourraient ne pas former un V, mais former un U ou un créneau ou avoir toute autre forme adaptée.

Les premier et second collecteurs d'alimentation secondaires présentent ensemble une première section de passage totale, le collecteur d'évacuation secondaire présentant une seconde section de passage. Le rapport entre ces première et seconde sections de passage doit prendre en compte le changement de phase du fluide s'il y a lieu. Typiquement, pour une application générateur de vapeur, la seconde section de passage doit être supérieure à trois fois la première section de passage, et de préférence supérieure à 10 fois. La première section de passage correspond ici à la somme des sections de passage respectives des premier et second collecteurs d'alimentation secondaire. Ces sections correspondent typiquement aux sections droites des premier et second collecteurs d'alimentation secondaire. Ainsi, la section de passage du collecteur d'évacuation secondaire est beaucoup plus importante que la section de passage des collecteurs d'alimentation secondaires.

Ceci permet d'abord de limiter la vitesse d'écoulement du fluide secondaire dans le collecteur d'évacuation secondaire. Ceci est important quand l'échangeur de chaleur est un générateur de vapeur. Par ailleurs, ceci permet d'agencer un plus grand nombre de passages secondaires au voisinage du collecteur d'évacuation secondaire. En effet, entre deux plaques données, l'espace disponible au voisinage du collecteur d'évacuation secondaire pour faire passer les passages secondaires est plus faible que dans les tronçons centraux des plaques, situés à distance des deux extrémités longitudinales des plaques. Il est donc nécessaire de réduire le nombre de passages secondaires débouchant dans le collecteur d'évacuation secondaire en fusionnant les parties terminales de plusieurs passages secondaires. Toutefois, ceci réduit la section de passage disponible pour le fluide secondaire et crée donc une perte de charge significative. Dans l'invention, le fait de choisir un collecteur d'évacuation secondaire de grande taille permet de limiter la diminution du nombre de passages secondaires au voisinage du collecteur d'évacuation secondaire. Typiquement, si l'on considère un tronçon central de la plaque secondaire situé longitudinalement à mi-distance entre les deux extrémités longitudinales de la plaque, ce tronçon intermédiaire est traversé par un nombre N1 de passages secondaires. Le nombre de passages secondaires débouchant dans le collecteur d'évacuation secondaire vaut quant à lui N2. Dans l'invention, N2 est compris entre 0,7 fois N1 et N1 de préférence. En d'autres termes, la diminution du nombre de passages secondaires entre le tronçon central et l'entrée dans le collecteur d'évacuation secondaire est inférieure à 30% de préférence.

Ceci permet également de limiter les pertes de charge pour le fluide secondaire traversant l'échangeur de chaleur.

De préférence, l'échangeur comprend des premier et second groupes de passages secondaires raccordant fluidiquement respectivement les premier et second collecteurs d'alimentation secondaires au collecteur d'évacuation secondaire, les premier et second groupes de passages secondaires ayant chacun une première section de passage totale à mi-longueur respectivement entre les premier et second collecteurs d'alimentation secondaires et le collecteur d'évacuation secondaire, les premier et second groupes de passages secondaires ayant chacun une seconde section de passage total inférieure à 10% de la première section de passage en sortie respectivement des premier et second collecteurs d'alimentation secondaires.

En d'autres termes, pour une application générateur de vapeur, si l'on considère le premier groupe de passages secondaires, celui-ci offre en sortie du premier collecteur d'alimentation secondaire une section de passage réduite, très inférieure à la section de passage offerte par exemple à mi-parcours entre les collecteurs. La situation est la même pour le second groupe de passages secondaires, desservant le second collecteur d'alimentation secondaire.

On crée ainsi un groupe de diaphragmes au niveau de la sortie des collecteurs d'alimentation. Ces diaphragmes sont situés immédiatement en aval des premier et second collecteurs d'alimentation secondaires. Ces diaphragmes contribuent à maintenir une pression élevée dans les collecteurs d'alimentation secondaires, et permettent ainsi d'obtenir des débits de fluide secondaire sensiblement égaux dans les différents passages secondaires. Dans une application de type générateur de vapeur, ils contribuent aussi à exclure le risque d'instabilités de débit entre les différentes rangées de passages secondaires situées à différents niveaux de l'échangeur en régime diphasique, en imposant une perte de charge importante et calibrée dans la zone où le fluide est monophasique liquide en entrée de plaque. De plus, le nombre de passages secondaires sortant des collecteurs d'alimentation secondaires étant plus faible que celui obtenu à mi longueur entre les premier et second collecteur d'alimentation secondaire et le collecteur d'évacuation secondaire, une zone de transition où le nombre de passages augmente progressivement est créée dans la partie basse des plaques secondaires.

Avantageusement, les passages primaires d'un même niveau primaire sont entièrement séparés les uns des autres. En d'autres termes, les passages primaires d'un même niveau primaire ne communiquent pas les uns avec les autres. Le fluide primaire ne peut pas passer d'un passage primaire à un autre. Dans le cas où les passages primaires sont creusés dans les plaques primaires, ceci contribue à créer une surface d'appui importante de la première grande face de la plaque primaire sur la seconde grande face de la plaque qui recouvre la plaque primaire. Ceci est particulièrement important dans le cas où les plaques sont soudées les unes aux autres par diffusion. Les passages primaires rectilignes et sans interruption sur la plus grande partie de la trajectoire du fluide primaire permettent de limiter les pertes de charges dans la traversée de l'échangeur.

Avantageusement, chaque niveau secondaire comporte une pluralité de passages secondaires communiquant les uns avec les autres.

Ainsi, les passages secondaires d'un même niveau sont séparés les uns des autres par des isthmes interrompus. Ainsi, un isthme donné, séparant deux passages secondaires voisins, présente plusieurs interruptions permettant au fluide secondaire de passer d'un passage secondaire à un autre. Ces interruptions sont de préférence régulièrement réparties sur toute la longueur des passages secondaires. On évite ainsi qu'il se crée des instabilités interpassages.

Ceci contribue également à uniformiser les débits de fluide secondaire dans les différents passages secondaires. Ceci contribue à faire que les profils de vitesse et les profils de température le long des différents passages secondaires soient uniformes.

De plus, dans le cas où les passages secondaires sont creusés dans les plaques secondaires, les isthmes séparant les passages secondaires contribuent eux aussi à créer une surface d'appui suffisante pour les premières grandes faces de la plaque secondaire sur les secondes grandes faces de la plaque primaire qui les recouvre. En effet, les interruptions, au total, ne s'étendent que sur une faible longueur des passages secondaires.

Plus précisément, à chaque niveau secondaire entre deux plaques données, le nombre de passages secondaires est sensiblement constant dans une partie médiane entre les premier et second collecteurs d'alimentation secondaire et le collecteur d'évacuation secondaire. Comme indiqué plus haut, le nombre de passages secondaires se réduit dans une seconde partie quand on se rapproche du collecteur d'évacuation secondaire à partir de la partie médiane. Les passages secondaires sont séparés les uns des autres, dans la seconde partie, à la fois par des isthmes discontinus et par des isthmes continus, ces derniers délimitant en fait un certain nombre de groupes de canaux à isthmes discontinus (typiquement 8 groupes de canaux). On entend ici par isthmes continus des isthmes qui ne présentent aucune discontinuité depuis la partie médiane jusqu'au collecteur d'évacuation secondaire.

De manière symétrique, le nombre de passages secondaires augmente dans une troisième partie quand on se rapproche de la partie médiane à partir des premier et second collecteurs d'alimentation secondaires, comme décrit plus haut. Les passages secondaires sont séparés dans la troisième partie à la fois par des isthmes discontinus et par des isthmes continus, ces derniers délimitant en fait un certain nombre de groupes de canaux à isthmes discontinus (typiquement 8 groupes de canaux). On entend ici par isthmes continus des isthmes qui ne présentent aucune discontinuité depuis les premier et second collecteurs d'alimentation secondaires jusqu'à la partie médiane.

Dans la partie médiane, les passages secondaires sont séparés les uns des autres seulement par des isthmes discontinus. Il n'y a pas d'isthmes continus.

Dans les seconde et troisième parties, les isthmes continus sont régulièrement répartis, au sens où on trouve sensiblement le même nombre d'isthmes discontinus entre deux isthmes continus voisins.

Dans les seconde et troisième parties, le tracé des passages secondaires est sinueux, avec plusieurs changements de direction. Les isthmes continus forcent le fluide secondaire à se répartir sur toute la largeur du niveau secondaire, et contribuent à l'obtention d'un débit uniforme dans tous les passages.

Dans des variantes non préférées, les passages primaires d'une même plaque peuvent communiquer les uns avec les autres, et/ou les passages secondaires d'une même plaque peuvent être entièrement séparés les uns des autres. Ces variantes peuvent être en particulier examinées pour des applications autres que le générateur de vapeur.

Typiquement, les plaques de l'échangeur sont soudées les unes aux autres par diffusion.

Ceci permet d'assembler de manière très solide les plaques les unes aux autres. Ceci est particulièrement important quand l'écart de pression entre le fluide primaire et le fluide secondaire est élevé. Dans certaines applications, cet écart de pression peut être supérieur à 100 bars.

Selon un second aspect, l'invention concerne un réacteur nucléaire, comprenant :
- une cuve ;
- un coeur disposé dans la cuve ;
- au moins un échangeur de chaleur ayant les caractéristiques ci-dessus, disposé dans la cuve, l'échangeur de chaleur étant suspendu à la cuve au niveau du collecteur d'évacuation secondaire.

L'échangeur est ainsi maintenu en porte à faux par rapport à la cuve, par des points de fixation placés autour de la sortie du collecteur d'évacuation secondaire. Ce mode de supportage permet à l'échangeur de chaleur de s'expanser vers le bas sous l'effet de la dilatation thermique.

Par ailleurs, le fait de fixer l'échangeur à la paroi de la cuve par un dispositif de fixation unique permet d'agencer plusieurs échangeurs de chaleur à la périphérie de la cuve, et de laisser libre le centre de la cuve, ce qui permet l'implantation d'autres organes internes.

D'autres caractéristiques et avantages de l'invention ressortiront de la description détaillée qui en est donnée ci-dessous, à titre indicatif et nullement limitatif en référence aux figures annexées, parmi lesquelles :
- la Figure 1 est une représentation schématique en coupe de l'échangeur de chaleur de l'invention ;
- les Figures 2 et 3 sont des vues de face des plaques primaires et secondaires, du côté où sont creusés les passages primaires et secondaires ;
- la Figure 4 est une vue agrandie d'une partie de la plaque primaire représentée sur la Figure 2 ;
- les Figures 5 et 6 sont des vues agrandies de deux parties de la plaque secondaire représentée sur la Figure 3 ;
- la Figure 7 est une vue en perspective, partielle, de l'échangeur de chaleur de l'invention ;
- la Figure 8 est une représentation schématique simplifiée de plusieurs échangeurs de chaleur disposés dans la cuve d'un réacteur nucléaire ; et
- la Figure 9 est une représentation schématique en coupe d'une zone de l'échangeur de chaleur, pour une variante de réalisation des passages primaires et secondaires.

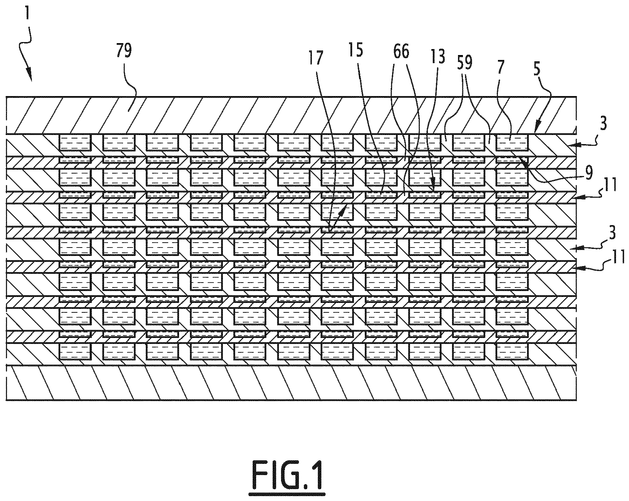

L'échangeur à plaque 1 représenté sur la Figure 1 est un générateur de vapeur destiné à être implanté dans la cuve d'un réacteur nucléaire de taille petite ou moyenne.

L'échangeur 1 comporte :
- une pluralité de plaques primaires 3, chaque plaque primaire 3 ayant une première grande face 5 dans laquelle sont réalisés une pluralité de passages primaires 7 prévus pour la circulation du fluide primaire du réacteur nucléaire, et une seconde grande face 9, opposée à la première et dépourvue de passages primaires ;
- une pluralité de plaques secondaires 11, chaque plaque secondaire 11 ayant une première grande face 13 dans laquelle sont réalisés une pluralité de passages secondaires 15 prévus pour la circulation du fluide secondaire du réacteur nucléaire, et une seconde grande face 17, opposée à la première et dépourvue de passage secondaire ;
- des premier et second collecteurs 19 et 21 d'alimentation des passages secondaires 15 en fluide secondaire ; et
- un collecteur unique 23 d'évacuation du fluide secondaire sortant des passages secondaires, dans lequel débouchent les passages secondaires 15.

Comme visible sur la Figure 1, les plaques primaires et secondaires 3 et 11 sont empilées les unes sur les autres de manière alternée, chaque plaque primaire étant encadrée par deux plaques secondaires et réciproquement. Les passages primaires 7 sont des canaux gravés dans la première grande face 5 de chaque plaque primaire. Ces canaux sont débouchants à leurs deux extrémités opposées. Ils sont ouverts au niveau de la première grande face 5. Le sens de circulation du fluide primaire est représenté par des flèches sur la figure 2.

De même, les passages secondaires 15 sont des canaux gravés dans la première grande face 13 de chaque plaque secondaire 11. A leurs extrémités amont 25, ils débouchent dans l'un des deux collecteurs d'alimentation secondaire 19 ou 21. A leurs extrémités aval 27, ils débouchent dans le collecteur d'évacuation secondaire. Chaque canal secondaire 15 est ouvert au niveau de la grande face 13. Le sens de circulation du fluide secondaire est représenté par des flèches sur la figure 3.

Les plaques primaires et secondaires 3 et 11 sont empilées de telle sorte que la seconde grande face 9 d'une plaque primaire donnée soit appliquée contre la première grande face 13 de la plaque secondaire située immédiatement en dessous. De même, la seconde grande face 17 de la plaque secondaire est appliquée contre la première grande face 5 de la plaque primaire située immédiatement en dessous d'elle. Ainsi, les passages primaires 7 sont fermés au niveau de la première grande face 5 par la plaque secondaire située immédiatement au-dessus. De même, les passages secondaires 15 sont fermés au niveau de la première grande face 13 par la plaque primaire située immédiatement au-dessus.

Les plaques primaires et secondaires 3 et 11 sont soudées les unes aux autres par diffusion.

Comme visible sur les Figures 2 et 3, les plaques primaires et secondaires 3 et 11 présentent sensiblement la même forme. Ces plaques sont allongées suivant un axe longitudinal X. Elles sont toutes parallèles les unes aux autres. Elles sont sensiblement symétriques par rapport à un plan médian P, contenant l'axe longitudinal X et sensiblement perpendiculaire aux plaques.

Le collecteur d'évacuation secondaire 23 est situé à une première extrémité longitudinale 29 des plaques. Plus précisément, chaque plaque présente une ouverture triangulaire 31 découpée à sa première extrémité 29, les ouvertures 31 des différentes plaques étant placées en coïncidence les unes avec les autres. Les ouvertures 31 définissent ensemble le collecteur 23. Elles sont placées sur le plan médian P.

En variante, les ouvertures 31 ne sont pas de forme triangulaire, mais sont par exemple rectangulaires ou de toute autre forme adaptée.

Au contraire, les premier et second collecteurs d'alimentation secondaire 19 et 21 sont placés à la seconde extrémité longitudinale 32 des plaques. Ils sont placés de manière symétrique l'un de l'autre par rapport au plan médian P. Ils sont écartés de ce plan P.

Chaque plaque présente deux ouvertures 33, 35, les ouvertures 33, 35 découpées dans les différentes plaques étant placées en coïncidence les unes avec les autres. Elles définissent ensemble respectivement les collecteurs 19 et 21.

Comme visible sur les Figures 2 et 3, chaque plaque est délimitée par deux bords droits longitudinaux 37 et 39 parallèles et opposés l'un à l'autre, un bord arqué 41 raccordant des premières extrémités respectives 43 et 45 des bords 37 et 39 l'une à l'autre, et un bord rentrant en V 46 raccordant des secondes extrémités respectives 47, 49 des deux bords 37 et 39 l'une à l'autre. Le bord arqué 41 délimite la première extrémité 29 de la plaque. Il est bombé vers l'extérieur de la plaque. Le bord en V 46 pointe longitudinalement vers la première extrémité 29 de la plaque. Il délimite la seconde extrémité 32 de la plaque. Il comporte deux ailes 48, 50 se rejoignant à un sommet situé dans le plan médian P. L'aile 48 délimite avec l'extrémité 47 une zone triangulaire dans laquelle est ménagée la découpe 33. De manière symétrique, l'aile 50 délimite avec l'extrémité 49 une zone triangulaire dans laquelle est ménagée la découpe 35.

En variante, le bord 41 n'est pas arqué et est constitué d'un ou plusieurs segments de droites.

Comme visible sur la Figure 2 et 3, l'ouverture 31 est triangulaire et présente une forme de triangle isocèle. Elle pointe longitudinalement vers la seconde extrémité de la plaque.

Comme visible sur la Figure 2, les canaux primaires 7 s'étendent parallèlement les uns aux autres suivant une direction générale longitudinale. Ils présentent chacun une extrémité amont débouchante au niveau du bord arqué 41. Ils présentent également chacun une extrémité aval débouchante au niveau du bord en V 46. Plus précisément, chacun des passages primaires 7 situés à gauche du plan médian P a une extrémité amont débouchant dans une zone du bord 41 située entre le bord longitudinal 37 et l'ouverture 31. Les extrémités aval débouchent au niveau de l'aile 48. Inversement, les passages primaires situés à droite du plan médian P ont une extrémité amont qui débouche dans la zone du bord 41 située entre le bord longitudinal 39 et l'ouverture 31. Leurs extrémités aval débouchent au niveau de l'aile 50 du bord en V 46.

Chaque passage primaire 7 présente une portion amont 53 au moins partiellement arquée s'étendant sur la première extrémité 29 de la plaque, une partie médiane 55 rectiligne et longitudinale, et une partie aval 57 au moins partiellement arquée, s'étendant sur la seconde extrémité 32 de la plaque. La courbure de la partie amont 53 est inverse de la courbure de la partie aval 57. En d'autres termes, si la partie amont est tournée vers le bord longitudinal 37, la partie aval 57 est tournée vers le plan médian P. Ainsi, les passages primaires qui sont relativement proches des bords longitudinaux 37 et 39 présentent des tronçons amont 53 relativement plus courts et des tronçons aval 57 relativement plus longs. Inversement, les passages primaires situés à proximité du plan médian P présentent des tronçons amont relativement plus longs et des tronçons aval relativement plus courts. Ainsi, tous les passages primaires présentent sensiblement la même longueur développée.

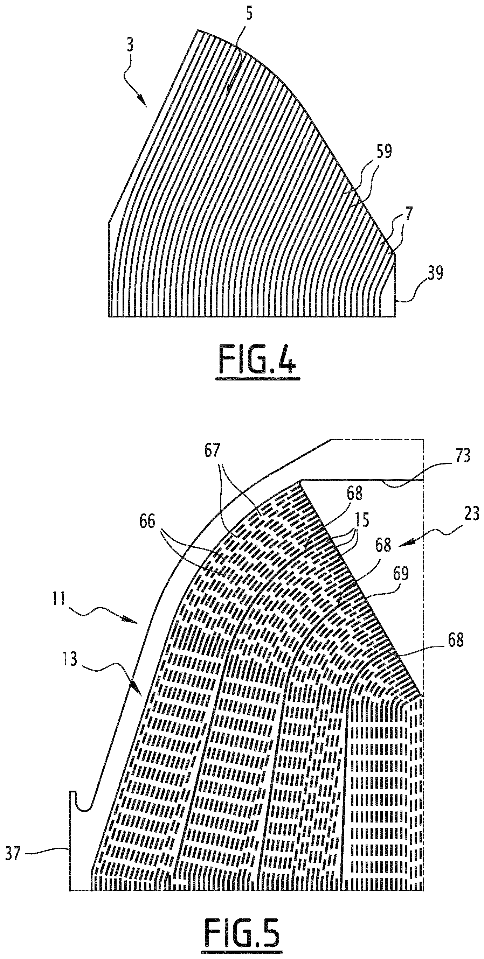

Comme visible sur la Figure 4, les passages primaires sont entièrement séparés les uns des autres. Plus précisément, ils sont séparés les uns des autres par des isthmes 59 continus, chaque isthme 59 séparant deux passages primaires 7 voisins l'un de l'autre. Les isthmes 59 sont soudés par diffusion à la seconde grande face de la plaque située immédiatement au-dessus.

Les collecteurs d'alimentation secondaires 19 et 21 sont alimentés en fluide secondaire par un conduit, non représenté, qui traverse la paroi 87. Cette distribution du fluide secondaire peut être faite par plusieurs tubes en parallèle entre la traversée de paroi 87 et les collecteurs 19 et 21.

Comme visible sur la Figure 3, les passages secondaires 15 présentent chacun un tronçon amont 61, débouchant dans l'un des deux collecteurs d'alimentation secondaire 19, 21 et s'étendant sur la seconde extrémité 32 de la plaque, un tronçon médian 63 rectiligne et longitudinal, s'étendant en vis-à-vis des bords 37 et 39, et un tronçon aval 65 débouchant dans le collecteur d'évacuation secondaire 23 et ménagé sur la première extrémité 29 de la plaque.

Les tronçons 61 s'étendent, à partir des collecteurs 19 ou 21, vers le plan médian P et vers la première extrémité longitudinale 39 ou 37. Les tronçons 61 des passages secondaires situés les plus proches des bords longitudinaux 37 et 39 sont relativement plus courts, alors que les tronçons amont 61 des passages secondaires situés les plus proches du plan médian sont relativement plus longs.

A l'inverse, les tronçons aval 65 des passages situés les plus proches des bords longitudinaux 37 et 39 sont relativement plus longs alors que les tronçons 65 des passages situés les plus proches du plan médian P sont relativement plus courts. Ainsi, les passages secondaires présentent tous sensiblement la même longueur développée. Les tronçons aval 65 présentent une portion arquée, de courbures tournées vers le plan médian P. Par ailleurs, ils comprennent également une portion rectiligne soit longitudinale, soit convergeant vers le plan médian P quand on les suit suivant le sens de circulation du fluide secondaire.

Le nombre de passages secondaires est sensiblement constant dans la partie médiane de la plaque secondaire 11, et vaut par exemple 136.

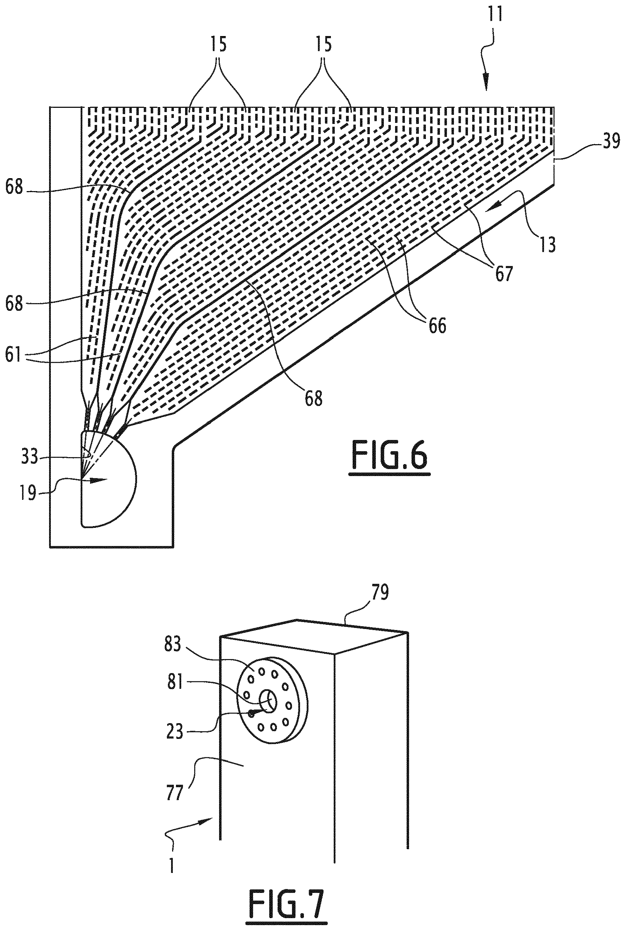

En revanche, le nombre de passages secondaires va en s'accroissant à partir de chacun des collecteurs 19, 21 vers la partie médiane de la plaque. Ainsi, la plaque comporte par exemple 4 tronçons 61 à proximité immédiate de chacun des collecteurs 19, 21. Ces tronçons 61 se subdivisent au fur et à mesure qu'on s'éloigne des collecteurs 19, 21, en augmentant ainsi le nombre de passages secondaires. Cette évolution est représentée de manière schématique sur la figure 3, et plus précisément sur la figure 6. [Merci de compléter la Figure 6 en montrant comment sont constitués les diaphragmes].

Inversement, le nombre de tronçons aval 65 diminue au fur et à mesure qu'on se rapproche du collecteur d'évacuation 23. A proximité immédiate du collecteur 23, le nombre de tronçons aval 65 est de par exemple 104. Cette évolution est représentée de manière schématique sur la figure 3, et plus précisément sur la figure 5.

De ce fait, la section de passage offerte au fluide secondaire immédiatement en aval des collecteurs 19, 21 est réduite. Les extrémités amont des passages secondaires constituent ainsi un diaphragme permettant de maintenir la pression de fluide secondaire dans les collecteurs 19, 21 à un niveau élevé. Cet effet est encore accentué par le fait que les quatre tronçons 61, au voisinage immédiat du collecteur 19, 21, ont une section particulièrement faible, qui s'accroît quand on s'éloigne du collecteur 19, 21.

Comme visible sur les Figures 5 et 6, les passages secondaires 15 communiquent entre eux. Dans la partie médiane de la plaque, ils sont séparés les uns des autres seulement par des isthmes 66 discontinus. Ces isthmes 66 présentent des interruptions 67, à travers lesquelles le fluide secondaire peut passer d'un passage secondaire à un autre.

Entre les collecteurs d'alimentation secondaire 19, 21 et la partie médiane, les passages secondaires sont séparés les uns des autres à la fois par des isthmes 66 discontinus et par des isthmes continus 68. Dans l'exemple représenté, la plaque secondaire présente trois isthmes continus 68 pour chaque collecteur d'alimentation secondaire 19, 21. Ces isthmes sont régulièrement espacés les uns des autres. Ainsi, à proximité de la partie médiane, on trouve neuf isthmes discontinus entre deux isthmes continus.

De même, entre la partie médiane et le collecteur d'évacuation secondaire 23, les passages secondaires sont séparés les uns des autres à la fois par des isthmes 66 discontinus et par des isthmes continus 68. Dans l'exemple représenté, la plaque secondaire présente trois isthmes continus 68 de chaque côté du plan médian P. Ces isthmes sont régulièrement espacés les uns des autres. Ainsi, à proximité de la partie médiane, on trouve douze isthmes discontinus entre deux isthmes continus.

Les isthmes 66 et 68 sont soudés par diffusion à la seconde grande face de la plaque primaire située immédiatement au-dessus.

Le collecteur d'évacuation secondaire 23 est délimité par trois surfaces planes, référencées respectivement 69, 71 et 73 et une cloison de fond, assurée par la plaque 79. Les surfaces planes 69 et 71 sont inclinées l'une par rapport à l'autre et convergent vers une arrête 75 pointant longitudinalement vers les secondes extrémités 32 des plaques. Les canaux secondaires 15 situés à gauche du plan médian P débouchent tous sur la surface 69, alors que les canaux secondaires situés à droite du plan médian P débouchent tous sur la surface 71.

L'échangeur de chaleur comporte typiquement, en plus des plaques primaires et secondaires 3 et 11, des plaques externes 77 et 79, plaquées l'une au-dessus et l'autre en dessous de l'empilement de plaques primaires et secondaires. Comme visible sur la Figure 7, la plaque externe 77 présente un orifice de sortie 81 pour le fluide secondaire. L'orifice 81 est placé dans le prolongement du collecteur d'évacuation secondaire 23. Celui-ci est ouvert vers l'orifice 81 et fermé à son extrémité opposée. La plaque 77 présente autour de l'orifice 81 une surépaisseur formant une bride 83 prévue pour la fixation de l'échangeur de chaleur sur la paroi de la cuve d'un réacteur. La plaque 79 forme une paroi au fond du collecteur d'évacuation secondaire 23.

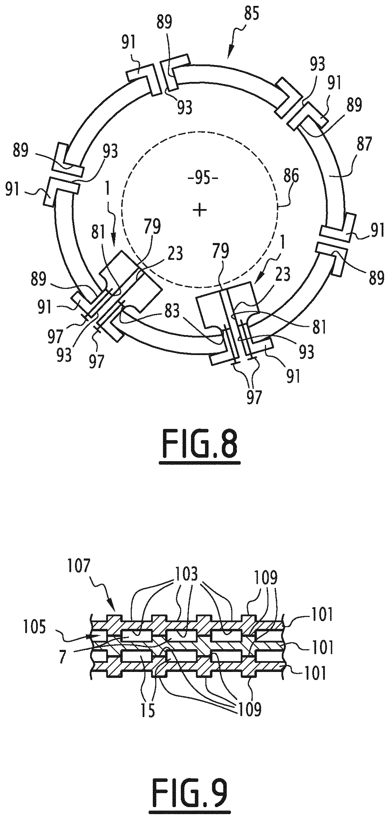

Comme visible sur la Figure 8, l'échangeur de chaleur 1 est prévu pour être disposé à l'intérieur de la cuve 85 d'un réacteur nucléaire. La cuve 85 est délimitée par une paroi périphérique 87 présentant plusieurs ouvertures 89 régulièrement réparties autour de son axe central. Des traversées 91 sont engagées dans des ouvertures 89 et sont prévues à la fois pour la fixation des échangeurs 1 et pour le passage du fluide secondaire. Les traversées 91 délimitent intérieurement un passage 93.

Plusieurs échangeurs de chaleur 1 sont répartis autour de la cuve, à proximité de la paroi 87. Ainsi, le centre 95 de la cuve est dégagé, les échangeurs de chaleur n'occupant que la périphérie de cette cuve. Chaque échangeur de chaleur 1 est rigidement fixé à la cuve par l'intermédiaire de la bride 83. La bride 83 est plaquée contre l'extrémité interne de la traversée 91 et rigidement fixée à la traversée 91 par l'intermédiaire de tirants 97. Dans cette situation, l'orifice de sortie 81 du fluide secondaire coïncide avec le passage 93. Le passage 93 traverse la traversée 91 de part en part et débouche, à l'extérieur de la cuve, dans un conduit faisant partie du circuit secondaire du réacteur nucléaire. Ce conduit n'est pas représenté. L'échangeur de chaleur 1 est fixé à la cuve seulement par l'intermédiaire des tirants 97 disposés au niveau de la sortie 81 et du passage 93. Une telle disposition permet de maintenir l'échangeur en porte à faux, à proximité de la paroi de la cuve, et permet ainsi de dégager le centre de la cuve. L'échangeur est libre de s'expanser vers le bas sous l'effet de la dilatation thermique.

Le coeur 86 du réacteur est placé en partie basse à l'intérieur de la cuve 85. Plusieurs échangeurs de chaleur 1 sont placés au-dessus du coeur.

Dans la variante de réalisation de la Figure 8, les plaques 101 de l'échangeur de chaleur portent des rainures 103 sur leurs deux grandes faces 105, 107 opposées. Les rainures 103 sont séparées les unes des autres par des isthmes 109. Ces rainures 103 coïncident les unes avec les autres quand les plaques 101 sont empilées, de même que les isthmes 109. Les rainures 103 en vis-à-vis situées entre deux plaques 101 données, à un niveau primaire, définissent des passages primaires 7. Les rainures 103 en vis-à-vis situées entre deux plaques 101 données, à un niveau secondaire, définissent des passages secondaires 15.

## Revendications

1. Echangeur de chaleur à plaques (1), l'échangeur comprenant :
- une pluralité de plaques (3, 11) empilées les unes sur les autres, les plaques (3, 11) délimitant entre elles alternativement une pluralité de passages primaires (7) et une pluralité de passages secondaires (15), les passages primaires (7) étant prévus pour la circulation d'un fluide primaire et les passages secondaires (15) étant prévus pour la circulation d'un fluide secondaire, ;
- un premier collecteur (19) d'alimentation des passages secondaires (15) en fluide secondaire et un collecteur (23) d'évacuation du fluide secondaire dans lequel débouchent les passages secondaires (15) ;
- les plaques (3, 11) étant parallèles à un axe longitudinal déterminé (X) et présentant un plan médian (P) commun contenant l'axe longitudinal (X),
**caractérisé en ce que**
- l'échangeur (1) comprend un second collecteur d'alimentation secondaire (21), les premier et second collecteurs d'alimentation secondaires (19, 21) et le collecteur d'évacuation secondaire (23) étant ménagés dans les plaques (3, 11) et s'étendant sensiblement perpendiculairement aux plaques (3, 11),
- le collecteur d'évacuation secondaire (23) est situé à une première extrémité longitudinale (29) des plaques (3, 11) dans le plan médian (P), les premier et second collecteurs d'alimentation secondaires (19, 21) étant situés à une seconde extrémité longitudinale (32) des plaques (3, 11) opposée à la première, de manière symétrique par rapport au plan médian (P) et écartés du plan médian (P), et
- l'échangeur (1) comprend des premier et second groupes de passages secondaires (15) raccordant fluidiquement respectivement les premier et second collecteurs d'alimentation secondaires (19, 21) au collecteur d'évacuation secondaire (23), les premier et second groupes de passages secondaires (15) ayant chacun une première section de passage totale à mi longueur entre respectivement les premier et second collecteurs d'alimentation secondaire (19, 21) et le collecteur d'évacuation secondaire (23), les premier et second groupes de passages secondaires (15) ayant chacun une seconde section de passage totale inférieure à 10% de la première section de passage en sortie respectivement des premier et second collecteurs d'alimentation secondaire (19, 21) .

2. Echangeur selon la revendication 1, **caractérisé en ce que** les passages primaires et secondaires (7, 15) sont creusés dans des grandes faces (5, 13) respectivement des plaques (3, 11).

3. Echangeur selon la revendication 1 ou 2, **caractérisé en ce que** les passages secondaires (15) présentent des longueurs développées respectives comprises entre L0+10% et L0-10%, L0 étant une longueur prédéterminée de référence, tous les passages secondaires (15) présentant sensiblement la même longueur développée.

4. Echangeur selon l'une quelconque des revendications précédentes, **caractérisé en ce que** les passages primaires (7) présentent des longueurs développées respectives comprises entre L1+10% et L1-10%, L1 étant une longueur de référence prédéterminée, tous les passages primaires (7) présentent sensiblement la même longueur développée.

5. Echangeur selon l'une quelconque des revendications précédentes, **caractérisé en ce que** le collecteur d'évacuation secondaire (23) présente une section droite en V.

6. Echangeur selon l'une quelconque des revendications précédentes, **caractérisé en ce que** le collecteur d'évacuation secondaire (23) est délimité par deux surfaces planes (69, 71) inclinées l'une par rapport à l'autre, les passages secondaires (15) débouchant dans l'une ou l'autre des deux surfaces planes (69, 71).

7. Echangeur selon l'une quelconque des revendications précédentes, **caractérisé en ce que** les premier et second collecteurs d'alimentation secondaires (19, 21) présentent ensemble une première section de passage totale, le collecteur d'évacuation secondaire (23) présentant une seconde section de passage supérieure à 3 fois la première section de passage.

8. Echangeur selon l'une quelconque des revendications précédentes, **caractérisé en ce qu'**il comprend un premier nombre de passages secondaires (15) à mi longueur entre les premier et second collecteurs d'alimentation secondaire (19, 21) et le collecteur d'évacuation secondaire (23), l'échangeur ayant un second nombre de passages secondaires (15) débouchant dans le collecteur d'évacuation secondaire (31), le second nombre étant compris entre 70% et 100% du premier nombre.

9. Echangeur selon l'une quelconque des revendications précédentes, **caractérisé en ce que** les passages primaires (7) délimités entre deux plaques données sont entièrement séparés les uns des autres.

10. Echangeur selon l'une quelconque des revendications précédentes, **caractérisé en ce que** les passages secondaires (15) délimités entre deux plaques données communiquent les uns avec les autres.

11. Echangeur selon la revendication 10, **caractérisé en ce que** qu'il comprend, entre deux plaques données, un premier nombre de passages secondaires (15) sensiblement constant dans une partie médiane entre les premier et second collecteurs d'alimentation secondaire (19, 21) et le collecteur d'évacuation secondaire (23), le nombre de passages secondaires (15) se réduisant dans une seconde partie quand on se rapproche du collecteur d'évacuation secondaire (31) à partir de la partie médiane, les passages secondaires (15) étant séparés dans la seconde partie à la fois par des isthmes discontinus (66) et par des isthmes continus (68) depuis la partie médiane jusqu'au collecteur d'évacuation secondaire (23).

12. Echangeur selon la revendication 10 ou 11, **caractérisé en ce que** qu'il comprend, entre deux plaques données, un premier nombre de passages secondaires (15) sensiblement constant dans une partie médiane entre les premier et second collecteurs d'alimentation secondaire (19, 21) et le collecteur d'évacuation secondaire (23), le nombre de passages secondaires (15) augmentant dans une troisième partie quand on se rapproche de la partie médiane à partir des premier et second collecteurs d'alimentation secondaires (19, 21), les passages secondaires (15) étant séparés dans la troisième partie à la fois par des isthmes discontinus (66) et par des isthmes continus (68) depuis les premier et second collecteurs d'alimentation secondaires (19, 21) jusqu'à la partie médiane.

13. Echangeur selon l'une quelconque des revendications précédentes, **caractérisé en ce que** les plaques (3, 11) sont soudées les unes aux autres par diffusion.

14. Réacteur nucléaire, comprenant :
- une cuve (85)
- un coeur (86) disposé dans la cuve (85) ;
- au moins un échangeur de chaleur (1) selon l'une quelconque des revendications précédentes, disposé dans la cuve, l'échangeur de chaleur (1) étant suspendu à la cuve (85) au niveau du collecteur d'évacuation secondaire (23).

## Patentansprüche

1. Plattenwärmetauscher (1), wobei der Tauscher aufweist:
- eine Mehrzahl von Platten (3, 11), welche aufeinandergestapelt sind, wobei die Platten (3, 11) zwischen ihnen abwechselnd eine Mehrzahl von primären Kanälen (7) und eine Mehrzahl von sekundären Kanälen (15) begrenzen, wobei die primären Kanäle (7) für die Zirkulation eines Primärfluids vorgesehen sind und die sekundären Kanäle (15) für die Zirkulation eines Sekundärfluids vorgesehen sind,
- einen ersten Sammelkanal (19) zur Versorgung der sekundären Kanäle (15) mit Sekundärfluid und einen Sammelkanal (23) zum Auslassen des Sekundärfluids, in welchen die sekundären Kanäle (15) münden,
- wobei die Platten (3, 11) parallel zu einer festgelegten Längsachse (X) sind und eine gemeinsame Mittelebene (P), die die Längsachse (X) enthält, aufweisen,
- wobei der Tauscher (1) einen zweiten Sekundärsammelkanal zur Versorgung (21) aufweist, wobei der erste und der zweite Sekundärsammelkanal zur Versorgung (19, 21) und der Sekundärsammelkanal zum Auslassen (23) in den Platten (3, 11) ausgebildet sind und sich im Wesentlichen senkrecht zu den Platten (3, 11) erstrecken,
- wobei der Sekundärsammelkanal zum Auslassen (23) an einem ersten Längsende (29) der Platten (3, 11) in der Mittelebene (P) angeordnet ist, wobei der erste und zweite Sekundärsammelkanal zur Versorgung (19, 21) an einem zweiten Längsende (32) der Platten (3, 11), welches zum ersten entgegengesetzt ist, auf zur Mittelebene (P) symmetrische Weise und von der Mittelebene (P) im Abstand angeordnet sind, und
wobei der Tauscher (1) eine erste und eine zweite Gruppe von sekundären Kanäle (15), welche den ersten bzw. zweiten Sekundärsammelkanal zur Versorgung (19, 21) fluidisch mit dem Sekundärsammelkanal zum Auslassen (23) verbinden, aufweist, wobei die erste und die zweite Gruppe von sekundären Kanälen (15) jeweils einen ersten Gesamtkanalquerschnitt mittig zwischen dem ersten bzw. zweiten Sekundärsammelkanal zur Versorgung (19, 21) und dem Sekundärsammelkanal zum Auslassen (23) aufweisen, wobei die erste und die zweite Gruppe von sekundären Kanälen (15) jeweilig einen zweiten Gesamtkanalquerschnitt, welcher kleiner als 10% des ersten Gesamtkanalquerschnitt ist, am Ausgang des ersten bzw. zweiten Sekundärsammelkanals zur Versorgung (19, 21) aufweisen.

2. Tauscher gemäß dem Anspruch 1, **gekennzeichnet dadurch, dass** die primären und sekundären Kanäle (7, 15) jeweilig zugeordnet in zwei große Seiten (5, 13) der Platten (3, 11) vertieft sind.

3. Tauscher gemäß dem Anspruch 1 oder 2, **gekennzeichnet dadurch, dass** die sekundären Kanäle (15) gestreckte Längen, welche jeweilig zwischen L0+10% und L0-10% liegen, aufweisen, wobei L0 eine vorbestimmte Bezugslänge ist, wobei alle sekundären Kanäle (15) im Wesentlichen die gleiche gestreckte Länge haben.

4. Tauscher gemäß irgendeinem der vorhergehenden Ansprüche, **gekennzeichnet dadurch, dass** die primären Kanäle (7) gestreckte Längen, welche jeweilig zwischen L1+10% und L1-10% liegen, aufweisen, wobei L1 eine vorbestimmte Bezugslänge ist, wobei alle primären Kanäle (7) im Wesentlichen die gleiche gestreckte Länge haben.

5. Tauscher gemäß irgendeinem der vorhergehenden Ansprüche, **gekennzeichnet dadurch, dass** der Sekundärsammelkanal zum Auslassen (23) einen V-förmigen geraden Querschnitt hat.

6. Tauscher gemäß irgendeinem der vorhergehenden Ansprüche, **gekennzeichnet dadurch, dass** der Sekundärsammelkanal zum Auslassen (23) begrenzt ist durch zwei ebene Flächen (69, 71), welche zueinander geneigt sind, wobei die sekundären Kanäle (15) in die eine oder die andere von den zwei ebenen Flächen (69, 71) münden.

7. Tauscher gemäß irgendeinem der vorhergehenden Ansprüche, **gekennzeichnet dadurch, dass** der erste und der zweite Sekundärsammelkanal zur Versorgung (19, 21) gemeinsam einen gesamten, ersten Kanalquerschnitt haben, wobei der Sekundärsammelkanal zum Auslassen (23) einen zweiten Kanalquerschnitt, welcher größer als das 3-fache des ersten Kanalquerschnitts ist, hat.

8. Tauscher gemäß irgendeinem der vorhergehenden Ansprüche, **gekennzeichnet dadurch, dass** er eine erste Zahl von sekundären Kanälen (15) mittig zwischen dem ersten und zweiten Sekundärsammelkanal zur Versorgung (19, 21) und dem Sekundärsammelkanal zum Auslassen (23) aufweist, wobei der Tauscher eine zweite Zahl von sekundären Kanälen (15), welche in den Sekundärsammelkanal zum Auslassen (31) münden, aufweist, wobei die zweite Zahl zwischen 70% und 100% der ersten Zahl liegt.

9. Tauscher gemäß irgendeinem der vorhergehenden Ansprüche, **gekennzeichnet dadurch, dass** die primären Kanäle (7), welche zwischen zwei gegebenen Platten begrenzt sind, vollständig voneinander getrennt sind.

10. Tauscher gemäß irgendeinem der vorhergehenden Ansprüche, **gekennzeichnet dadurch, dass** die sekundären Kanäle (15), welche zwischen zwei gegebenen Platten begrenzt sind, miteinander in Verbindung stehen.

11. Tauscher gemäß irgendeinem der vorhergehenden Ansprüche, **gekennzeichnet dadurch, dass** er zwischen zwei gegebenen Platten eine erste Zahl von sekundären Kanälen (15), welche im Wesentlichen konstant ist, in einem mittleren Abschnitt zwischen dem ersten und zweiten Sekundärsammelkanal zur Versorgung (19, 21) und dem Sekundärsammelkanal zum Auslassen (23) aufweist, wobei die Zahl von sekundären Kanälen (15) sich in einem zweiten Abschnitt, bei Annäherung an den Sekundärsammelkanal zum Auslassen (31) von dem mittleren Abschnitt aus, verringert, wobei die sekundären Kanäle (15) in dem zweiten Abschnitt von dem mittleren Abschnitt aus zum Sekundärsammelkanal zum Auslassen (23) hin sowohl durch diskontinuierliche Stege (66) als auch durch kontinuierliche Stege (68) voneinander getrennt sind.

12. Tauscher gemäß dem Anspruch 10 oder 11, **gekennzeichnet dadurch, dass** er zwischen zwei gegebenen Platten eine erste Zahl von sekundären Kanälen (15), welche im Wesentlichen konstant ist, in einem mittleren Abschnitt zwischen dem ersten und zweiten Sekundärsammelkanal zur Versorgung (19, 21) und dem Sekundärsammelkanal zum Auslassen (23) aufweist, wobei die Zahl von sekundären Kanälen (15) sich in einem dritten Abschnitt, bei Annäherung an den mittleren Abschnitt von dem ersten und zweiten Sekundärsammelkanal zur Versorgung (19, 21) aus, erhöht, wobei die sekundären Kanäle (15) in dem dritten Abschnitt von dem ersten und zweiten Sekundärsammelkanal zur Versorgung (19, 21) aus zum mittleren Abschnitt hin sowohl durch diskontinuierliche Stege (66) als auch durch kontinuierliche Stege (68) voneinander getrennt sind.

13. Tauscher gemäß irgendeinem der vorhergehenden Ansprüche, **gekennzeichnet dadurch, dass** die Platten (3, 11) miteinander diffusionsverschweißt sind.

14. Kernreaktor, aufweisend:
- einen Behälter (85)
- einen Kern (86), welche in dem Behälter (85) angeordnet ist,
- mindestens einen Wärmetauscher (1) gemäß irgendeinem der vorhergehenden Ansprüche, welcher in dem Behälter angeordnet ist, wobei der Wärmetauscher (1) auf Höhe des Sekundärsammelkanals zum Auslassen (23) an dem Behälter (85) hängt.

## Claims

1. A plate heat exchanger (1), the exchanger comprising:
- a plurality of plates (3, 11) stacked upon each other, the plates (3, 11) delimiting between them alternately a plurality of primary passages (7) and a plurality of secondary passages (15), the primary passages (7) being provided for circulation of a primary fluid and the secondary passages (15) being provided for the circulation of a secondary fluid;
- a first collector (19) for supplying the secondary passages (15) with secondary fluid and a collector (23) for discharging the secondary fluid into which open the secondary passages (15);
- the plates (3, 11) being parallel to a determined longitudinal axis (X) and having a common middle plane (P) containing the longitudinal axis (X),
**characterized in that**
- the exchanger (1) comprises a second secondary supply collector (21), the first and second secondary supply collectors (19, 21) and the secondary discharge collector (23) being made in the plates (3, 11) and substantially extending perpendicularly to the plates (3, 11),
- the secondary discharge collector (23) is located at a first longitudinal end (29) of the plates (3, 11) in the middle plane (P), the first and second secondary supply collectors (19, 21) being located at a second longitudinal end (32) of the plates (3, 11) opposite to the first, symmetrically relatively to the middle plane (P) and away from the middle plane (P),
- the exchanger comprises first and second groups of secondary passages (15) fluidically connecting the first and second secondary supply collectors (19, 21) to the secondary discharge collector (23) respectively, the first and second groups of secondary passages (15) each having a first total passage section at half-length between the first and second secondary supply collectors (19, 21) and the secondary discharge collector (23) respectively, the first and second groups of secondary passages (15) each having a second total passage sectionof less than 10% of the first passage section at the output of the first and second secondary supply collectors (19, 21) respectively.

2. The exchanger according to claim 1, **characterised in that** the primary and secondary passages (7, 15) are dug in large faces (5, 13) of the plates (3, 11) respectively.

3. The exchanger according to claim 1 or 2, **characterized in that** the secondary passages (15) have respective developed lengths comprised between L0+10% and L0-10%, L0 being a predetermined reference length, all secondary passages (15) having substantially the same developed length.

4. The exchanger according to any of the preceding claims, **characterized in that** the primary passages (7) have respective developed lengths comprised between L1+10% and L1-10%, L1 being a predetermined reference length, all primary passages (7) having substantially the same developed length.

5. The exchanger according to any of the preceding claims, **characterized in that** the secondary discharge collector (23) has a V-shaped cross section.

6. The exchanger according to any of the preceding claims, **characterized in that** the secondary discharge collector (23) is delimited by two planar surfaces (69, 71) tilted relatively to each other, the secondary passages (15) opening in either one of the two planar surfaces (69, 71).

7. The exchanger according to any of the preceding claims, **characterized in that** the first and second secondary supply collectors (19, 21) have together a first total passage section, the secondary discharge collector (23) having a second passage section greater than 3 times the first passage section.

8. The exchanger according to any of the preceding claims, **characterized in that** it comprises a first number of secondary passages (15) at half-length between the first and second secondary supply collectors (19, 21) and the secondary discharge collector (23), the exchanger having a second number of secondary passages (15) opening into the secondary discharge collector (31), the second number being comprised between 70% and 100% of the first number.

9. The exchanger according to any of the preceding claims, **characterized in that** the primary passages (7) delimited between two given plates are entirely separate from each other.

10. The exchanger according to any of the preceding claims, **characterized in that** the secondary passages (15) delimited between two given plates communicate with each other.

11. The exchanger according to claim 10, **characterized in that** it comprises, between two given plates, a first number of secondary passages (15) substantially constant in a middle portion between the first and second secondary supply collectors (19, 21) and the secondary discharge collector (23), the number of secondary passages (15) being reduced in a second portion upon approaching the secondary discharge collector (31) from the middle portion, the secondary passages (15) being separated in the second portion both by discontinuous isthmi (66) and by continuous isthmi (68) from the middle portion as far as the secondary discharge collector (23).

12. The exchanger according to claim 10 or 11, **characterized in that** it comprises, between two given plates, a first substantially constant number of secondary passages (15) in a middle portion between the first and second secondary supply collectors (19, 21) and the secondary discharge collector (23), the number of secondary passages (15) increasing in a third portion upon approaching the middle portion from the first and second secondary supply collectors (19, 21), the secondary passages (15) being separated in the third portion both by discontinuous isthmi (66) and by continuous isthmi (68) from the first and second secondary supply collectors (19, 21) as far as the middle portion.

13. The exchanger according to any of the preceding claims, **characterized in that** the plates (3, 11) are welded to each other by diffusion bonding.

14. A nuclear reactor, comprising:
- a vessel (85)
- a core (86) positioned in the vessel (85);
- at least one heat exchanger (1) according to any of the preceding claims, positioned in the vessel, the heat exchanger (1) hanging from the vessel (85) from the secondary discharge collector (23).
